# EUROPÄISCHE PATENTSCHRIFT

(11) **EP 1 741 501 B1**
(45) Veröffentlichungstag und Bekanntmachung des Hinweises auf die Patenterteilung: **17.09.2008**
(21) Anmeldenummer: 06013881.5
(22) Anmeldetag: 05.07.2006
(51) Int. Cl.: B21D 55/00, F16P 3/14, B30B 15/28, B21D 37/10, B21D 37/20, B23P 15/24, B21D 37/02

(54) **Sicherheitseinrichtung für eine Abkantpresse und ein Lamellenwerkzeug**
Security device for a bending press and lamellar tool assembly
Dispositif de securité pour une presse plieuse et outil à lamelles

(30) Priorität: 06.07.2005 AT 11382005
(43) Veröffentlichungstag der Anmeldung: 10.01.2007
(60) Teilanmeldung: 08011998.5
(73) Patentinhaber: Trumpf Maschinen Austria GmbH & CO. KG., 4061 Pasching (AT)
(72) Erfinder: Denkmeier, Thomas, 4050 Traun (AT); Sperrer, Gerhard, 4553 Oberschlierbach (AT)
(74) Vertreter: Secklehner, Günter

(56) Entgegenhaltungen:
- EP-A2- 1 258 667
- WO-A-01/56720
- WO-A-20/05030410
- DE-A1- 2 117 245
- DE-A1- 4 409 556
- DE-A1- 10 327 388
- US-A- 5 579 884
- US-A- 5 878 619

## Beschreibung

Die Erfindung betrifft eine Sicherheitseinrichtung, wie sie im Oberbegriff des Anspruches 1 beschrieben ist.

Aus der WO 01/56720 A1 ist eine Sicherheitseinrichtung für eine Fertigungsmaschine, z.B. eine Abkantpresse, bekannt. Diese besteht aus einem Strahlensender und einem Strahlenempfänger. Diese sind an einem, über eine Antriebsanordnung relativ zu einem feststehenden Pressenbalken verstellbaren Pressenbalken mittels einer Haltevorrichtung befestigt und bilden einen Strahlenvorhang unmittelbar vor dem Arbeitsbereich der Biegewerkzeuge aus. Der Strahlenvorhang erstreckt sich über die gesamte Länge des Pressenbalkens unmittelbar vor den Biegewerkzeugen einer Bedienperson zugewandt und wird damit in Abhängigkeit des Bewegungsablaufes des verstellbaren Pressenbalkens ein die Sicherheit der Bedienperson durch unbedachtes Handeln gefährdender Zustand bei Unterbrechung des Lichtstrahlverlaufes festgestellt und in einem solchen Fall über die Steuereinrichtung der Fertigungsmaschine eine Not-Stopp-Funktion ausgelöst bzw. eine Bewegungsumkehr des verstellbaren Pressenbalkens in eine Öffnungsstellung zur Aufhebung der Gefährdung bewirkt.

Aufgabe der Erfindung ist es, eine Sicherheitseinrichtung für eine Fertigungseinrichtung zum Biegen eines Blechteils zu schaffen, mit der der Arbeitsraum unmittelbar zwischen den für eine Biegeoperation relativ zueinander verstellbaren Biegewerkzeugen überwacht wird und eine geringe Masse aufweisende Biegewerkzeuge erreicht werden.

Diese Aufgabe der Erfindung wird durch die im Anspruch 1 wiedergegebenen Merkmale erreicht. Der überraschende Vorteil liegt darin, dass durch die unmittelbare Erfassung der Lage der oberen Werkzeugeinheit bzw. von Werkzeuglamellen eine Behinderung des den Biegewerkzeugen vorgelagerten Arbeitsbereiches , wie sie bei der bekannten, durch mehrere Strahlen vor den Werkzeugen gegeben ist, vermieden wird, wodurch weiter auch der für eine Sicherheitseinrichtung erforderliche Steuerungsaufwand reduziert wird.

Möglich ist dabei eine Ausbildung nach Anspruch 2, weil dadurch eine größere Distanz zwischen einem Sender und einem Empfänger für Strahlen überbrückbar ist.

Von Vorteil ist aber auch eine Ausbildung nach Anspruch 3, wodurch eine abgesicherte Position für die Anbringung eines Senders und Empfängers erreicht wird und Biegeoperationen, die einen Endbereich der Werkzeugaufnahme durch bereits vorgebogener Werkstückbereiche überlappen, ohne Beeinträchtigung der Sicherheitsfunktion, ermöglicht werden.

Von Vorteil sind auch Ausbildungen nach den Ansprüchen 4 bis 6, weil dadurch die Funktion für das Halten des Oberwerkzeuges in der Werkzeugaufnahme unabhängig von der Funktion zum Spannen der Werkzeuglamellen gewährleistet ist.

Möglich sind die vorteilhaften Ausbildungen wie in den Ansprüchen 7 bis 14 gekennzeichnet, wodurch ein für die Spannfunktion der Werkzeuglamellen erforderlich exakt definierter Verstellweg vorgebeben ist.

Durch die im Anspruch 15 beschriebene, vorteilhafte Weiterbildung wird eine zentrale Lage für einen Strahlenkanal in der Werkzeugaufnahme erreicht.

Gemäß der vorteilhaften Weiterbildung wie im Anspruch 16 beschrieben, werden zwei exakte Schaltstellungen und ein Umschaltvorgang für die Bewegungsrichtung des Pressenbalkens innerhalb einer vorgegebenen Toleranzgrenze erreicht.

Es ist aber auch eine Ausbildung nach Anspruch 17 möglich, durch die eine Beeinträchtigung des Strahlenkanals durch etwaige Ablagerungen von Verunreinigungen weitestgehend vermieden wird.

Durch die im Anspruch 18 beschriebene Weiterbildung wird ein Umschaltvorgang zwischen den zwei Schaltzuständen verlässlich vor Erreichen einer, durch den Verstellweg definierten Endposition gewährleistet.

Weitere vorteilhafte Ausbildungen sind in den Ansprüchen 19 und 20 beschrieben, wodurch es möglich ist, beide möglichen Endpositionen der Werkzeuglamellen, also die abgesenkte bzw. gespannte Position positiv zu überwachen womit jeweils vor einem Biegeprozess die Funktion der Sicherheitseinrichtung ermittelt werden kann und damit die Richtlinien für die Sicherheitsklasse IV für derartige Fertigungseinrichtungen erfüllt sind.

Möglich ist weiters eine Ausbildung nach Anspruch 21, wodurch das Gewicht einer Werkzeuglamelle wesentlich reduziert wird und damit bei einem zur Vermeidung von Verletzungen vorgegebenen Gewicht die Dicke der Werkzeuglamelle und damit die Länge der Biegekante vergrößert werden kann, wodurch bei einer vorgegebenen Gesamtbiegelänge die Anzahl erforderlicher Werkzeuglamellen reduziert wird.

Schließlich ist aber auch eine Ausbildung nach Anspruch 22 vorteilhaft, wodurch eine Abdeckung des Laserstrahls erreicht wird und eine mögliche Störquelle bei unsachgemäßer Unterbrechung des Laserstrahl wirkungsvoll vermieden wird.

Zum besseren Verständnis der Erfindung wird diese anhand der in den Figuren gezeigten Ausführungsbeispiele näher erläutert.

Es zeigen:
- Fig. 1: eine Fertigungseinrichtung mit der erfindungsgemäßen Sicherheitseinrichtung in Ansicht;
- Fig. 2: die erfindungsgemäße Sicherheitseinrichtung an einer, mit einem Oberwerkzeug bestückten Werkzeugaufnahme, geschnitten gemäß den Linien II-II in Fig. 1;
- Fig. 3: die erfindungsgemäße Sicherheitseinrichtung, geschnitten gemäß den Linien III-III in Fig. 2;
- Fig. 4: ein Detail der Werkzeugaufnahme mit gespannten Werkzeug- und Referenzlamellen, geschnitten gemäß den Linien IV-IV in Fig. 5;
- Fig. 5: das Lamellenpaket der erfindungsgemäßen Sicherheitseinrichtung bei Auftreffen auf einem Körperteil, geschnitten gemäß den Linien V-V in Fig.4;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

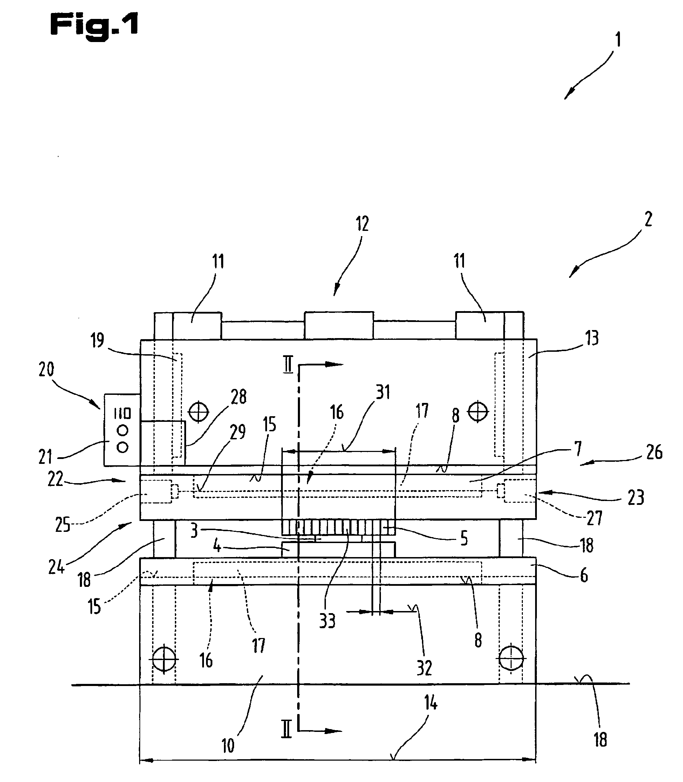

In der Fig. 1 ist eine Fertigungseinrichtung 1, insbesondere eine Abkantpresse 2, für eine Biegeumformung an einem Blechteil 3 zwischen einem feststehend, bevorzugt unteren Biegewerkzeug 4 und einem dazu relativ verstellbaren, oberen Biegewerkzeug 5 gezeigt. Die Biegewerkzeuge 4, 5 sind in einander gegenüberliegenden Werkzeugaufnahmen 6, 7 gespannt, die an gegenüberliegenden Stirnflächen 8, 9 eines feststehenden Tischbalkens 10 und eines, mittels Antriebe 11 einer Antriebsvorrichtung 12 verstellbaren Pressenbalken 13 angeordnet sind. Die Werkzeugaufnahmen 6, 7 erstrecken sich bevorzugt über eine gesamte Länge 14 des Tischbalkens 10 bzw. Pressenbalkens 13 und weisen eine, über die gesamte Länge 14 erstreckende Aufnahmenut 15 für die Biegewerkzeuge 4, 5 auf, und ist jede der Werkzeugaufnahmen 6, 7 mit einer Klemmeinrichtung 16, mechanisch oder hydromechanisch wirkend, versehen.

Der Tischbalken 10 ist unmittelbar bewegungsfest an Stirnflächen von C-förmigen Seitenständern 18 der Abkantpresse 2 befestigt, während der verstellbare Pressenbalken 13 in zu einer Aufstandsfläche 18 senkrecht verlaufenden Führungsanordnungen 19 verstellbar ge lagert ist. Die Fertigungseinrichtung 1 verfügt über eine Steuereinrichtung 20 mit einem Ein-und Ausgabeterminal 21.

Weiters ist eine, mit der Steuereinrichtung 20 leitungsverbundene Sicherheitseinrichtung 22 vorgesehen, durch die der unmittelbare Arbeitsbereich zwischen den Biegewerkzeugen 4 überwacht wird, um bei einer unsachgemäßen Bedienung der Fertigungseinrichtung 1 Verletzungen einer Bedienkraft zu verhindern.

Die Sicherheitseinrichtung ist im gezeigten und beschriebenen Ausführungsbeispiel integriert in der Werkzeugaufnahme 7. Selbstverständlich ist deren Anordnung auch an anderer Stelle am Pressenbalken 13 durchaus im Umfang der Erfindung möglich und stellt keine Einschränkung dar.

Die Sicherheitseinrichtung 22 umfasst eine Lichtstrahlen- Sende- und Empfangsvorrichtung 23, bevorzugt eine Lasereinrichtung mit zumindest einem, in der Aufnahmenut 15 der Werkzeugaufnahme 7 des oberen Biegewerkzeuges 5 in einem Endbereich 24 angeordneten Laserstrahlsender 25 und einem, in einem entgegen gesetzten Endbereich 26 und dem Laserstrahlsender 25 gegenüberliegend angeordneten Laserstrahlempfänger 27 und einen entsprechenden Generator 28. Dies ermöglicht die Übertragung eines Lichtstrahls 29, insbesondere einen Laserlichtstrahl vom Laserstrahlsender 25 zum Laserstrahlempfänger 27, der als Schaltmittel für die Generierung eines Ein/Aus-Schaltsignals mit entsprechender Steuerfunktion in der Steuereinrichtung 20 heranzuziehen ist und die Schaltzustände einem Empfang des Laserstrahles 29 im Laserstrahlempfänger 27, bei ungehinderterem Durchgang, oder keinem Empfang bei unterbrochenem Durchgang entsprechen.

Zur Erreichung dieser Funktion ist weiter vorgesehen, das in der Werkzeugaufnahme 7 angeordnete, obere Biegewerkzeug 4, wie an sich bekannt, als Lamellenwerkzeug 30 auszubilden, also eine erforderliche Werkzeuglänge 31 durch eine sich aus einer Dicke 32 einer Werkzeuglamelle 33 ergebenden Anzahl an Werkzeuglamellen 33 zu bilden. Bevorzugt beträgt die Dicke 32 einer Werkzeuglamelle 33 zwischen 2,0 mm und 20,0 mm, wobei das Gewicht der Werkzeuglamelle 33 noch zusätzlich dadurch beeinflussbar ist, ob es sich bei der Werkzeuglamelle 33 um eine sogenannte Massivlamelle oder eine Skelettlamelle handelt. Sicherheitsrelevant ist das Gewicht, das zwischen 80N und 250N, bevorzugt 150N betragen soll. Damit wird sichergestellt, dass bei einem losen Anwirken der Werkzeuglamelle 33 auf einen Körperteil der Bedienkraft, z.B. einem Finger, keine Quetschgefahr besteht.

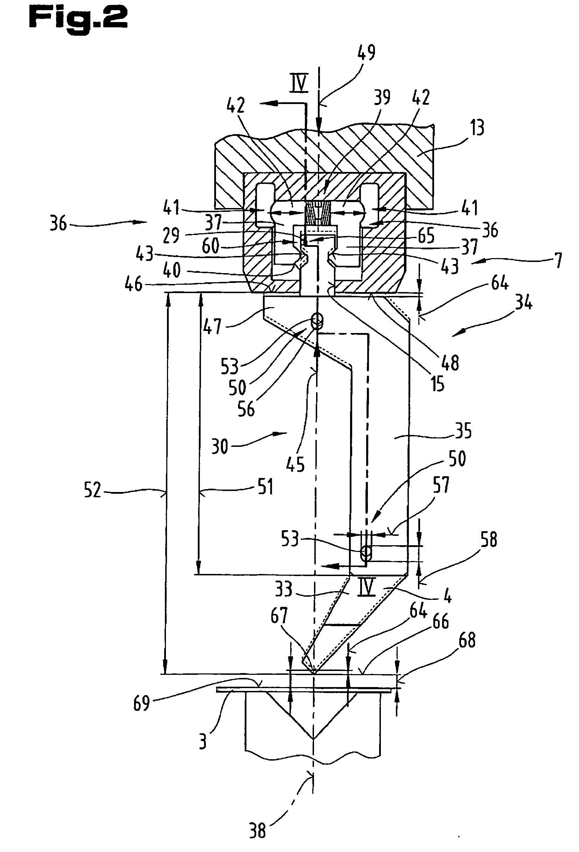

In den Fig. 2 bis 4 ist nun im Detail das Biegewerkzeug 4, konkret ein Lamellenpaket 34, gebildet aus einer Anzahl von Werkzeuglamellen 33 und zu beider Seiten angeordneten Referenzlamellen 35, eingesetzt in die Aufnahmenut 15 der Werkzeugaufnahme 7 des Pressenbalkens 13, gezeigt.

Die Werkzeugaufnahme 7 ist mit zwei voneinander unabhängig betätigbaren, bevorzugt hydromechanischen Spannvorrichtungen 36 versehen. Spannelemente 37 der Spannvorrichtungen 36 sind im Bezug auf eine Mittelachse 38 der Werkzeugaufnahme 7 symmetrisch gegenüberliegend und in zur Mittelachse 38 in senkrecht verlaufender Richtung entgegen der Wirkung einer zwischen diesen vorgesehenen Federanordnung 39, mit in die Aufnahmenut 15, zum Spannen des Biegewerkzeuges 4, ragenden Spannklauen 40, durch Druckbeaufschlagung mit einem Druckmedium verstellbar. In der Werkzeugaufnahme 7 sind in Richtung der Länge 14 erstreckende Druckräumen 41 vorgesehen. Die Spannelemente 37 weisen in die Druckräume 41 ragende Druckkolben 42 auf. Wird der entsprechende Druckraum 41 mit einem unter Druck stehenden Medium beaufschlagt, erfolgt eine Verstellung der Spannelemente 37 der entsprechenden Spannvorrichtung 36, entgegen der Wirkung der Federanordnung 39, in Richtung der Mittelachse 38, wobei die Spannklauen 40 in Spannnuten 43 von in die Aufnahmenut 15 ragenden Spannfortsätzen 44 der Werkzeuglamellen 33 in Eingriff gelangen. Durch die Geometrie der Spannklauen 40 und Anordnung der Spannnuten 43 der Spannlaschen 44 werden die Werkzeuglamellen 33 wie auch die Referenzlamellen 35 angehoben - gemäß Pfeil 45 - und mit zur Mittelachse 38 in einer senkrecht verlaufenden Ebene ausgebildeten Anlageflächen 46 von Werkzeugschultern 47 gegen Stützflächen 48 der Werkzeugaufnahme gepresst und sind damit die Werkzeuglamellen 33 für die Vornahme eines Biegevorganges an dem Blechteil 3 bei einer Verstellung des Pressenbalkens 13 - gemäß Pfeil 49 - in Arbeitsstellung.

Wie weiter den Fig. 2 bis 4 im Detail zu entnehmen, ist das Lamellenpaket 34 nach dem gezeigten Ausführungsbeispiel mit zwei, die Werkzeuglamellen 33 zwischen sich aufnehmenden Referenzlamellen 35 versehen. Diese sind mit den standardgemäß ausgebildeten Spannlaschen 44 versehen, sind jedoch nicht als Biegewerkzeuge ausgebildet, d.h. dass diese Referenzlamellen 35 nur um eine Teilhöhe 51 einer Gesamthöhe 52 der Werkzeuglamellen 33 die Stützfläche 48 der Werkzeugaufnahme 7 in Richtung des feststehenden Biegewerkzeuges 4 in der Werkzeugaufnahme 6 des Tischbalkens 10 überragen.

Das aus den beiden Referenzlamellen 35 und den zwischen diesen angeordneten Werkzeuglamellen gebildete Oberwerkzeug 30 ist zu einer Werkzeugeinheit über eine Linearfiihrungseinrichtung 50 zusammengefasst, die durch bevorzugt zwei, die gesamte Einheit in Richtung der Werkzeuglänge 31 querenden Führungsstangen 53 gebildet ist, wozu die Referenzlamellen 35 mit, einem Durchmesser 54 der Führungsstangen 53 entsprechenden, Bohrungen 55 versehen sind. Die Werkzeuglamellen 33 werden von den Führungsstangen 53 in Langlöchern 56 durchquert, mit einer Breite 57 etwa dem Durchmesser 54 entsprechend und einer Länge 58, die etwa dem zweifachen Durchmesser 54 entspricht, wobei die Ausrichtung der Langlöcher in vertikale Richtung, d.h. entsprechend der Verstellrichtung - gemäß Pfeil 49 - des Pressenbalkens 13 ist. Durch diese Linearführungseinrichtung 50 wird eine Relativverstellung der Werkzeuglamellen 33 gegenüber den Referenzlamellen 35 erreicht.

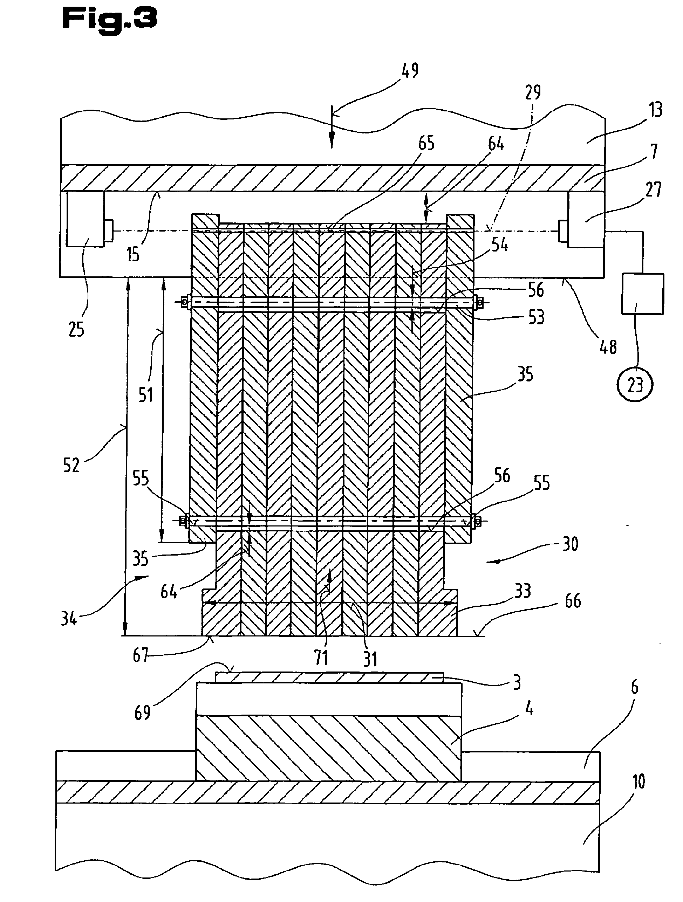

Durch die unabhängig voneinander betätigbaren Spannvorrichtungen 36 ist es nun möglich das Lamellenpaket 34 in der Werkzeugaufnahme durch Klemmen der Referenzlamellen 35 mit einer der Spannvorrichtungen 36 hängend zu fixieren wobei die Referenzlamellen 35 mit den Werkzeugschultern 47 bzw. deren Anlageflächen 46 gegen die Stützflächen 48 der Werkzeugaufnahme 7 gepresst werden. Die weitere, für das Spannen der Werkzeuglamellen 33 heranzuziehende Spannvorrichtung 36 wird erst unmittelbar vor einem Biegeprozess betätigt. Im ungespannten Zustand bewirkt nun die Relativverstellbarkeit zwischen den Referenzlamellen 35 und den Werkzeuglammellen 33 in der Führungseinrichtung 50, dass die Werkzeuglamellen 33 gegenüber den Referenzlamellen 35 schwerkraftbedingt in einer abgesenkten Stellung sind, wie dies den Fig. 2 und 3 zu entnehmen ist.

In den Spannfortsätzen 44 der Referenzlamellen 35 und der Werkzeuglamellen 33 sind diese in Richtung der Dicke 32 querende, in Seitenflächen 59 angeordnete, nutförmige Ausnehmungen 60 vorgesehen, wobei die Ausnehmungen 60 der Referenzlamellen 35 gegenüber den Ausnehmungen 60 der Werkzeuglamellen 33 einen Höhenversatz 61 aufweisen. Dabei ist eine Distanz 62 der Ausnehmung 60 der Referenzlamelle 35 von der Anlagefläche 46 der Werkzeugschulter 47 kleiner, als eine Distanz 63 der Ausnehmung 60 der Werkzeuglamelle 33 von der Anlagefläche 46 der Werkzeugschulter 47.

Wie nun insbesondere der Fig. 2 zu entnehmen, ist das Oberwerkzeug 30 in der Aufnahmenut 15 durch Formschluss der Spannelemente 37 mit den Spannnuten 43 der Referenzlamellen 35 vor dem Herausfallen aus der Werkzeugaufnahme 7 gesichert. Die davon unabhängige weitere Spannvorrichtung 35, die mit den Spannnuten 43 der Werkzeuglamellen 33 zusammenwirkt, ist im ungespannten Zustand, d.h., dass die Spannklauen 40 dieser Spannvorrichtung 36 außer Eingriff mit den Spannnuten 43 der Werkzeuglamellen 33 ist. Dies bewirkt, dass die Werkzeuglamellen 33 gegenüber den Masterlamellen 50 in der sich durch die Langlöcher 56 ergebenden, abgesenkten Lage - wie in vollen Linien dargestellt - befinden. Vor der Einleitung eines Biegevorganges am Blechteil 3 erfolgt nunmehr ein Spannen der Werkzeuglamellen 33 durch Herstellung des Formschlusses der Spannklauen 40 der Spannvorrichtung 36 mit den Spannnuten 40 der Werkzeuglamellen 33, wodurch auch diese mit der Anlagefläche 46 zur Anlage an die Stützfläche 48 angehoben werden - wie in unterbrochenen Linien gezeigt. Ein Verstellweg 64 ist geringfügig größer als der Höhenversatz 61 und hat dies zur Wirkung, dass im ungespannten Zustand der Werkzeuglamellen 33 die Ausnehmungen 60 der Werkzeuglamellen 33 mit den Ausnehmungen 60 der Masterlamellen 50 eine fluchtende Höhenlage einnehmen und damit einen ununterbrochenen Strahlenkanal 65 für den vom Laserstrahlensender 25 ausgesendeten Laserstrahl 29 bilden, der somit von dem in der Aufnahmenut 15 gegenüberliegend angeordneten Laserstrahlenempfänger 27 empfangen wird. Damit ist in der Steuereinrichtung 20 die Verstellbewegung - gemäß Pfeil 49 - des Pressenbalkens 13 freigegeben und erfolgt die Verstellung mittels der Antriebe 11, wobei ein endgültiges Spannen der Werkzeuglamellen 33 mittels der Spannvorrichtung 36 erst nach Erreichen einer sogenannten Mute-Position 66 einer Biegekante 67 erfolgt, bei der ein Abstand 68 der Biegekante 67 von einer Werkstückoberfläche 69 kleiner ist, als etwa 8 bis 12 mm. Damit ist sichergestellt, dass kein Körperteil, z.B. Finger, einer Bedienungsperson in dem diese gefährdenden Bereich ist. Durch das Spannen der Werkzeuglamellen 33 kommt es zwar zu einer Unterbrechung des Empfangs des Laserstrahls 29 an dem Laserstrahlempfänger 15, jedoch ist steuertechnisch vorgesehen, mit Erreichen der Mute-Position 66, den Fortlauf der Abwärtsbewegung beizubehalten, um die Biegeoperation durchzuführen. Nach erfolgter Aufwärtsbewegung des Pressenbalkens 13 wird zur Vornahme einer weiteren Biegeoperation und Aktivierung der Sicherheitseinrichtung 22 der ursprüngliche Zustand mit Entspannung der Werkzeuglamellen 33 wieder hergestellt, damit der ununterbrochene Strahlenkanal 65, durch die fluchtende Lage der Ausnehmungen 60, wieder hergestellt.

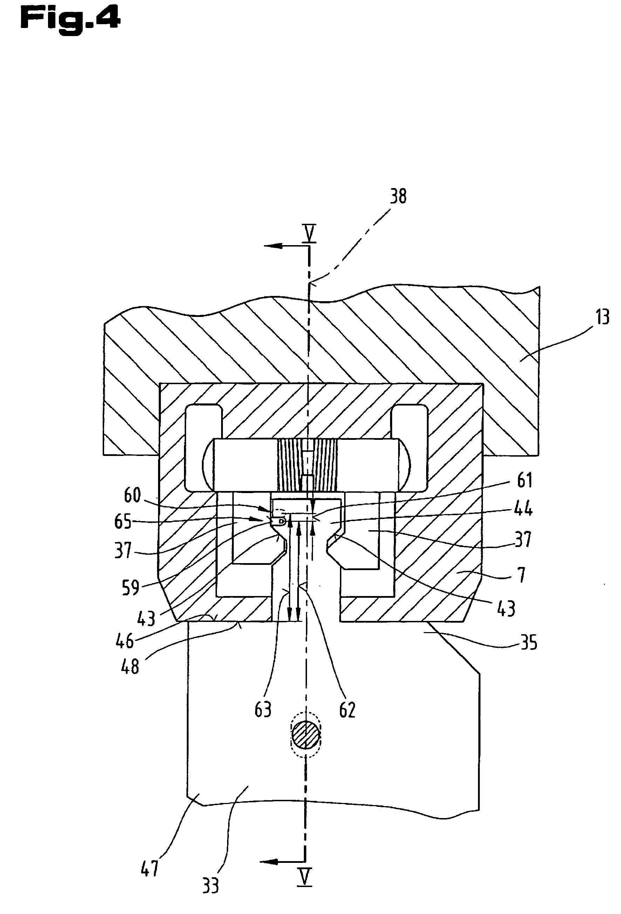

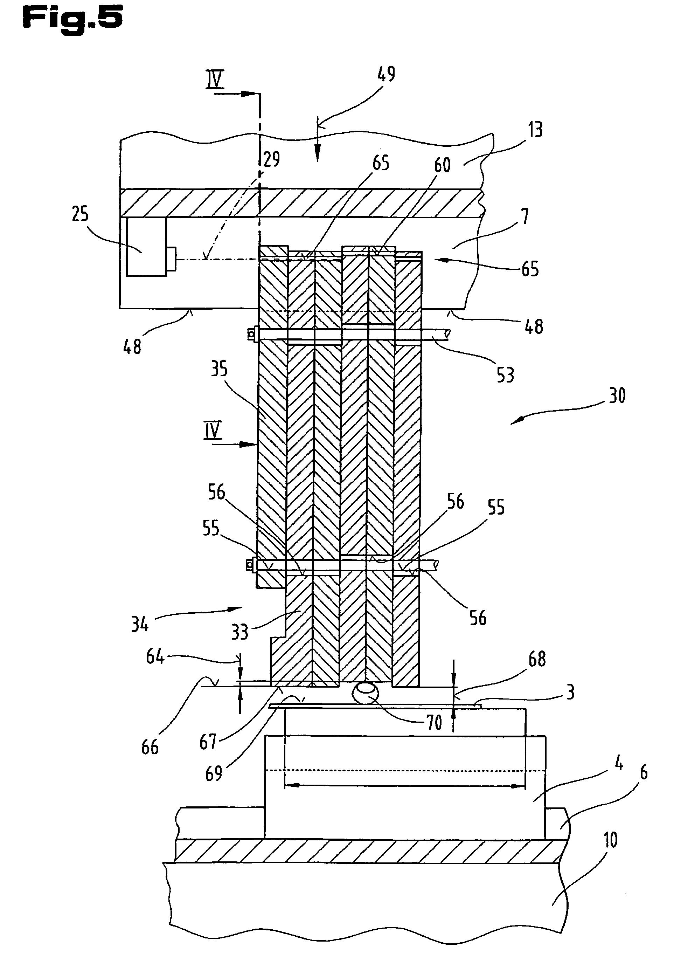

In den Fig. 4 und 5 ist nunmehr die Situation dargestellt, die vorliegt, wenn vor dem Erreichen der Mute-Position 66 z.B. ein Finger 70 zwischen die Biegekante 67 und der Werkstückoberfläche 69, bei Abwärtsbewegung des Pressenbalkens 13 - Pfeil 49, gerät.

In diesem Fall werden die den Bereich des Fingers 70 überdeckenden Werkzeuglamellen 33 gegenüber benachbarten Werkzeuglamellen 33, jedenfalls aber gegenüber der Referenzlamelle 35 entgegen der Verstellrichtung des Pressenbalkens 13, verstellt und damit der Strahlenkanal 65 unterbrochen. Dies bewirkt in der Steuereinrichtung 30 einen Not-Stopp-Vorgang bzw. eine Umsteuerung der Antriebe 11 auf Aufwärtsbewegung des Pressenbalkens 13.

Durch die erfindungsgemäße Ausbildung der Sicherheitseinrichtung 22 ist aber auch eine Kontrolle der Funktion der Relativbeweglichkeit der Werkzeuglamellen 33 vor Einleitung der Abwärtsbewegung des Pressenbalkens 13 möglich z.B. durch einen Spannvorgang und unmittelbar folgenden Entspannvorgang der Werkzeuglamellen 33 in der oberen Endlage des Pressenbalkens 13. Falls nach dem Entspannvorgang der ununterbrochene Strahlenkanal 65 durch Einnahme der Hängeposition der Werkzeuglamellen 33 nicht wieder hergestellt ist, und damit kein Lichtstrahldurchgang vorliegt, ist keine Abwärtsbewegung des Pressenbalkens möglich und wird dieser Zustand z.B. durch eine Störmeldung angezeigt.

Wie bereits erwähnt, soll zur Vermeidung von Verletzungen, das Einzelgewicht der Werkzeuglamelle 33, das sich aus der Masse der Werkzeuglamelle 33 ergibt, etwa zwischen 80N und 250N, bevorzugt 150N betragen. Diese Limitierung wird einerseits durch Festlegung der Dicke 32 in Abhängigkeit der Gesamtfläche der Werkzeuglamelle 33 erreicht.

Die Ausführungsbeispiele zeigen mögliche Ausführungsvarianten der Sicherheitseinrichtung 22, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Sicherheitseinrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Fertigungseinrichtung
- 2: Abkantpresse
- 3: Blechteil
- 4: Biegewerkzeug
- 5: Biegewerkzeug

- 6: Werkzeugaufnahme
- 7: Werkzeugaufnahme
- 8: Stirnfläche
- 9: Stirnfläche
- 10: Tischbalken

- 11: Antrieb
- 12: Antriebsvorrichtung
- 13: Pressenbalken
- 14: Länge
- 15: Aufnahmenut

- 16: Klemmeinrichtung
- 18: Aufstandsfläche
- 19: Führungsanordnung
- 20: Steuereinrichtung

- 21: Ein- und Ausgabeterminal
- 22: Sicherheitseinrichtung
- 23: Lichtstrahlen-Sende- und Empfangsvorrichtung
- 24: Endbereich
- 25: Laserstrahlsender

- 26: Endbereich
- 27: Laserstrahlempfänger
- 28: Generator
- 29: Lichtstrahl
- 30: Oberwerkzeug

- 31: Werkzeuglänge
- 32: Dicke
- 33: Werkzeuglamelle
- 34: Lamellenpaket
- 35: Referenzlamelle

- 36: Spannvorrichtung
- 37: Spannelement
- 38: Mittelachse
- 39: Federanordnung
- 40: Spannklaue

- 41: Druckraum
- 42: Druckkolben
- 43: Spannnut
- 44: Spannfortsatz
- 45: Pfeil

- 46: Anlagefläche
- 47: Werkzeugschulter
- 48: Stützfläche
- 49: Pfeil
- 50: Linearführungseinrichtung

- 51: Teilhöhe
- 52: Gesamthöhe
- 53: Führungsstange
- 54: Durchmesser
- 55: Bohrung

- 56: Langloch
- 57: Breite
- 58: Länge
- 59: Seitenfläche
- 60: Ausnehmung

- 61: Höhenversatz
- 62: Distanz
- 63: Distanz
- 64: Verstellweg
- 65: Strahlenkanal

- 66: Mute-Position
- 67: Biegekante
- 68: Abstand
- 69: Werkstückoberfläche
- 70: Finger

## Patentansprüche

1. Sicherheitseinrichtung (22) für eine Fertigungseinrichtung (1) zum Biegen eines Blechteils (3), insbesondere für eine Abkantpresse (2), mit einem feststehenden Tischbalken (10) und mit einem relativ zum Tischbalken (10) mit einer Antriebsvorrichtung (12) in einer Führungsanordnung (19) linear verstellbaren Pressenbalken (13) und mit in Werkzeugaufnahmen (6, 7) an gegenüber liegenden Stirnflächen (8, 9) des Tischbalkens (10) und des Pressenbalkens (13) angeordneten, zwischen einander zugewandten Formbereichen einen Operationsbereich ausbildenden Biegewerkzeugen (4, 5) und mit einer den Operationsbereich auf einen Fremdkörpereingriff überwachenden Lichtstrahlen- Sende-und Empfangsvorrichtung (23), **dadurch gekennzeichnet, dass** das im Pressenbalken (13) angeordnete Biegewerkzeug (5) durch ein Lamellenpaket (34) aus zumindest einer Referenzlamelle (35) und zumindest einer zu dieser relativ verstellbaren Werkzeuglamelle (33) gebildet ist, die mit die Werkzeuglamelle (33) in Richtung einer Dicke (32) querenden Ausnehmungen (60) versehen sind, die bei fluchtender Ausrichtung einen zur Stirnfläche (8) des Pressenbalkens (13) parallel verlaufenden Strahlenkanal (65) für einen Lichtstrahl (29), insbesondere Laserlichtstrahl, ausbilden.

2. Sicherheitseinrichtung (22) nach Anspruch 1, **dadurch gekennzeichnet, dass** die Lichtstrahlen- Sende- und Empfangsvorrichtung (23) durch einen Laser gebildet ist.

3. Sicherheitseinrichtung (22) nach Anspruch 1 oder 2, **dadurch gekennzeichnet, dass** in einer Aufnahmenut (15) der Werkzeugaufnahme (7) und /oder am Pressenbalken (13) in entgegen gesetzten Endbereichen (24, 26) einander gegenüber liegend zumindest je ein Laserstrahlsender (25) und ein Laserstrahlempfänger (27) angeordnet ist.

4. Sicherheitseinrichtung (22) nach einem der vorhergehenden Ansprüche, **dadurch gekennzeichnet, dass** zumindest die Werkzeugaufnahme (7) für das Biegewerkzeug (5) des Pressenbalkens (13) zwei voneinander unabhängig betätigbare Spannvorrichtungen (36) zum Spannen des Lamellenpaketes (34) aufweist.

5. Sicherheitseinrichtung (22) nach einem der vorhergehenden Ansprüche, **dadurch gekennzeichnet, dass** die Spannvorrichtungen (36) durch hydromechanische Spannsätze gebildet sind.

6. Sicherheitseinrichtung (22) nach einem der vorhergehenden Ansprüche, **dadurch gekennzeichnet, dass** die Werkzeuglamelle (33) und die Referenzlamelle (35) in der Werkzeugaufnahme (7) voneinander unabhängig durch die Spannvorrichtungen (36) gespannt werden.

7. Sicherheitseinrichtung (22) nach einem der vorhergehenden Ansprüche, **dadurch gekennzeichnet, dass** die Werkzeuglamelle (33) und die Referenzlamelle (35) in Verstellrichtung des Pressenbalkens (13) in einer Linearführungseinrichtung (50) relativ zueinander verschiebbar, aneinander angeordnet sind.

8. Sicherheitseinrichtung (22) nach einem der vorhergehenden Ansprüche, **dadurch gekennzeichnet, dass** ein Verstellweg (64) zwischen der Werkzeuglamelle (33) und der Referenzlamelle (35) etwa einem Nachlaufweg des Pressenbalkens (13) entspricht.

9. Sicherheitseinrichtung (22) nach einem der vorhergehenden Ansprüche, **dadurch gekennzeichnet, dass** die Linearführungseinrichtung (50) durch bevorzugt zwei das Lamellenpaket (34) in Richtung einer Werkzeuglänge (31) querenden Führungsstangen (53) gebildet ist.

10. Sicherheitseinrichtung (22) nach einem der vorhergehenden Ansprüche, **dadurch gekennzeichnet, dass** in der Referenzlammelle (35) Bohrungen (55) zur Aufnahme der Führungsstangen (53) angeordnet sind.

11. Sicherheitseinrichtung (22) nach einem der vorhergehenden Ansprüche, **dadurch gekennzeichnet, dass** in der Werkzeuglamelle (33) sich in Verstellrichtung des Pressenbalkens (13) zur Aufnahme der Führungsstangen (53) erstreckende Langlöcher (56) angeordnet sind.

12. Sicherheitseinrichtung nach einem der vorhergehenden Ansprüche, **dadurch gekennzeichnet, dass** die Bohrung (55) in der Referenzlamelle (35) einem Durchmesser (54) der Führungsstange (53) entspricht.

13. Sicherheitseinrichtung (22) nach einem der vorhergehenden Ansprüche, **dadurch gekennzeichnet, dass** eine Breite des Langloches (56) dem Durchmesser (54) der Führungsstange (53) entspricht.

14. Sicherheitseinrichtung (22) nach einem der vorhergehenden Ansprüche, **dadurch gekennzeichnet, dass** eine Länge (58) des Langloches (56) etwa dem Verstellweg (64) in Verstellrichtung des Pressenbalkens (13) zwischen der Referenzlamelle (35) und der Werkzeuglamelle (33) entspricht.

15. Sicherheitseinrichtung nach einem der vorhergehenden Ansprüche, **dadurch gekennzeichnet, dass** die den Strahlleitkanal (65) in der Referenzlamelle (35) und der Werkzeuglamelle (33) bildenden Ausnehmungen (60) durch in Seitenflächen (59) der Spannfortsätze (44) angeordnete nutförmige Vertiefungen gebildet sind.

16. Sicherheitseinrichtung nach einem der vorhergehenden Ansprüche, **dadurch gekennzeichnet, dass** eine Distanz (62) der Ausnehmung (60) in der Referenzlamelle (35) von einer Anlagefläche (46) einer Werkzeugschulter (47) um den Verstellweg (64) kleiner ist als eine Distanz (63) der Ausnehmung (60) von der Anlagefläche (46) in der Werkzeuglamelle (33).

17. Sicherheitseinrichtung (22) nach einem der vorhergehenden Ansprüche, **dadurch gekennzeichnet, dass** die Ausnehmungen (60) durch Durchbrüche in den Spannfortsätzen (44) gebildet sind.

18. Sicherheitseinrichtung (22) nach einem der vorhergehenden Ansprüche, **dadurch gekennzeichnet, dass** eine Höhe der Ausnehmungen (60) bzw. der Durchbrüche gleich oder kleiner dem Verstellweg (64) ist.

19. Sicherheitseinrichtung nach einem der vorhergehenden Ansprüche, **dadurch gekennzeichnet, dass** beidseits des Lamellenpakets (34) bzw. an Endbereichen (24, 26) des Pressenbalkens (13) jeweils zwei Laserstrahlsender (25) und diesen fluchtend gegenüberliegend zwei Laserstrahlempfänger (27) angeordnet sind und das Lamellenpaket (34) zwei voneinander unabhängige, durch die Ausnehmungen (60) ausgebildete Strahlenleitkanäle (65) aufweist.

20. Sicherheitseinrichtung nach einem der vorhergehenden Ansprüche, **dadurch gekennzeichnet, dass** in den Spannfortsätzen (44) der Referenzlamelle (35) und der Werkzeuglamelle (33) jeweils an entgegengesetzten Seitenflächen (59) die Ausnehmungen (60) angeordnet sind.

21. Sicherheitseinrichtung (22) nach einem der vorhergehenden Ansprüche, **dadurch gekennzeichnet, dass** die Werkzeuglamellen (33) durch Skelettlamellen gebildet sind.

22. Sicherheitseinrichtung (22) nach einem der vorhergehenden Ansprüche, **dadurch gekennzeichnet, dass** in der Aufnahmenut (15) zwischen dem Laserstrahlsender (25) und dem Lamellenpaket (34) und/oder dem Lamellenpaket (34) und dem Laserstrahlempfänger (27) Abschirmelemente für den Laserstrahl angeordnet sind.

## Claims

1. Security device (22) for a production unit (1) for bending a sheet metal component (3), in particular for a bending press (2), with a stationary table beam (10) and with a press beam (13) which can be moved linearly relative to the table beam (10) in a guide system (19) by means of a drive mechanism (12), and with bending tools (4, 5) disposed in tool holders (6, 7) on oppositely lying end faces (8, 9) of the table beam (10) and press beam (13) forming an operating region between mutually facing forming regions, and with a light beam emitter and receiver system (23) monitoring the operating region for ingress by a foreign body, **characterised in that** the bending tool (5) disposed in the press beam (13) is provided in the form of a lamella packet (34) comprising at least one reference lamella (35) and at least one tool lamella (33) which can be displaced relative to it, which tool lamella (33) is provided with cut-outs (60) extending through it in the direction of a thickness (32) which when aligned, form a beam passage (65) for a light beam (29), in particular a laser beam, extending parallel with the end face (8) of the press beam (13).

2. Security device (22) as claimed in claim 1, **characterised in that** the light beam is provided by an emitter and receiver system (23).

3. Security device (22) as claimed in claim 1 or 2, **characterised in that** at least one light beam emitter (25) and one light beam receiver (27) are respectively disposed lying opposite one another in a receiving groove (15) of the tool holder (7) and/or on the press beam (13) in oppositely lying end regions (24, 26).

4. Security device (22) as claimed in one of the preceding claims, **characterised in that** at least the tool holder (7) for the bending tool (5) of the press beam (13) has two clamping mechanisms (36) for clamping the lamella packet (34) which can be operated independently of one another.

5. Security device (22) as claimed in one of the preceding claims, **characterised in that** the clamping mechanisms (36) are provided in the form of hydro-mechanical clamping units.

6. Security device (22) as claimed in one of the preceding claims, **characterised in that** the tool lamella (33) and the reference lamella (35) are clamped in the tool holder (7) independently of one another by clamping mechanisms (36).

7. Security device (22) as claimed in one of the preceding claims, **characterised in that** the tool lamella (33) and the reference lamella (35) are disposed adjoining one another and can be displaced relative to one another in a linear guide system (50) in the displacement direction of the press beam (13).

8. Security device (22) as claimed in one of the preceding claims, **characterised in that** a displacement path (64) between the tool lamella (33) and the reference lamella (35) approximately corresponds to a tracking path of the press beam (13).

9. Security device (22) as claimed in one of the preceding claims, **characterised in that** the linear guide system (50) is provided by preferably two guide rods (53) extending through the lamella packet (34) in the direction of a tool length (31).

10. Security device (22) as claimed in one of the preceding claims, **characterised in that** bores (55) are provided in the reference lamella (35) for receiving the guide rods (53).

11. Security device (22) as claimed in one of the preceding claims, **characterised in that** elongate holes (56) extending in the displacement direction of the press beam (13) are provided in the tool lamella (33) for receiving the guide rods (53).

12. Security device as claimed in one of the preceding claims, **characterised in that** the bore (55) in the reference lamella (35) corresponds to a diameter (54) of the guide rod (53).

13. Security device (22) as claimed in one of the preceding claims, **characterised in that** a width of the elongate hole (56) corresponds to the diameter (54) of the guide rod (53).

14. Security device (22) as claimed in one of the preceding claims, **characterised in that** a length (58) of the elongate hole (56) corresponds to approximately the displacement path (64) between the reference lamella (35) and the tool lamella (33) in the displacement direction of the press beam (13).

15. Security device as claimed in one of the preceding claims, **characterised in that** the cut-outs forming the beam directing passage (65) in the reference lamella (35) and the tool lamella (33) are provided in the form of groove-type cut-outs (60) disposed in end faces (59) of the clamping extensions (44).

16. Security device as claimed in one of the preceding claims, **characterised in that** a distance (62) of the cut-out (60) in the reference lamella (35) from a contact surface (46) of a tool shoulder (47) is smaller than a distance (63) of the cut-out (60) from the contact surface (46) in the tool lamella (33) by the displacement path (64).

17. Security device (22) as claimed in one of the preceding claims, **characterised in that** the cut-outs (60) are formed by orifices in the clamping extensions (44).

18. Security device (22) as claimed in one of the preceding claims, **characterised in that** a height of the cut-outs (60) or orifices is the same as or shorter than the displacement path (64).

19. Security device as claimed in one of the preceding claims, **characterised in that** two respective laser beam emitters (25) and two laser bean receivers (27) lying opposite and in alignment with them are provided at each end on the lamella packet (34) or on end regions (24, 26) of the press beam (13) and the lamella packet (34) has two mutually separate beam directing passages (65) formed by the cut-outs (60).

20. Security device as claimed in one of the preceding claims, **characterised in that** the cut-outs (60) are respectively disposed in the clamping extensions (44) of the reference lamella (35) and the tool lamella (33) on opposite end faces (59).

21. Security device (22) as claimed in one of the preceding claims, **characterised in that** the tool lamellae (33) are provided in the form of skeleton lamellae.

22. Security device (22) as claimed in one of the preceding claims, **characterised in that** screening elements for the laser beam are disposed in the receiving groove (15) between the laser beam emitter (25) and the lamella packet (34) and/or the lamella packet (34) and the laser beam receiver (27).

## Revendications

1. Dispositif de sécurité (22) pour un dispositif de fabrication (1) destiné à plier un élément en tôle (3), en particulier pour une presse plieuse (2), avec un support de banc (10) fixe et avec une barre de presse (13) linéairement mobile par rapport au support de banc (10) au moyen d'un dispositif d'entraînement (12) dans un ensemble de guidage (19), et avec des outils de pliage (4, 5) qui forment une zone opérationnelle entre des zones de formage orientées l'une vers l'autre et qui sont montés dans des porte-outils (6, 7) sur des surfaces frontales (8, 9) face à face du support de banc (10) et de la barre de presse (13), et avec un dispositif émetteur et récepteur (23) de faisceaux lumineux contrôlant la pénétration d'un corps étranger dans la zone opérationnelle, **caractérisé en ce que** l'outil de pliage (5), monté dans la barre de presse (13), est constitué d'un groupe de lamelles (34), formé par au moins une lamelle de référence (35) et au moins une lamelle d'outil (33) mobile par rapport à cette dernière, qui sont munies d'évidements (60), qui traversent la lamelle d'outil (33) dans le sens d'une épaisseur (32) et qui, dans une orientation alignée, forment un canal de guidage de faisceau (65), qui est orienté parallèlement à la surface frontale (8) de la barre de presse (3) et qui est destiné à un faisceau lumineux (29), en particulier un faisceau laser.

2. Dispositif de sécurité (22) selon la revendication 1, **caractérisé en ce que** le dispositif émetteur et récepteur (23) de faisceaux lumineux est formé par un laser.

3. Dispositif de sécurité (22) selon la revendication 1 ou 2, **caractérisé en ce que** respectivement au moins un émetteur de faisceau laser (25) et un récepteur de faisceau laser (27), situés en regard l'un de l'autre, sont disposés dans une rainure de réception (15) du porte-outil (7) et/ou sur la barre de presse (13) dans des zones d'extrémité (24, 26) opposées l'une à l'autre.

4. Dispositif de sécurité (22) selon l'une quelconque des revendications précédentes, **caractérisé en ce qu'**au moins le porte-outil (7) pour l'outil de pliage (5) de la barre de presse (13) comporte deux dispositifs de serrage (36) destinés à serrer le groupe de lamelles (34) et pouvant être actionnés indépendamment l'un de l'autre.

5. Dispositif de sécurité (22) selon l'une quelconque des revendications précédentes, **caractérisé en ce que** les dispositifs de serrage (36) sont formés par des ensembles de serrage hydromécaniques.

6. Dispositif de sécurité (22) selon l'une quelconque des revendications précédentes, **caractérisé en ce que** la lamelle d'outil (33) et la lamelle de référence (35) sont serrées indépendamment l'une de l'autre dans le porte-outil (7) par les dispositifs de serrage (36).

7. Dispositif de sécurité (22) selon l'une quelconque des revendications précédentes, **caractérisé en ce que** la lamelle d'outil (33) et la lamelle de référence (35) sont disposées de manière mobile l'une par rapport à l'autre dans un dispositif de guidage linéaire (50) dans la direction de déplacement de la barre de presse (13).

8. Dispositif de sécurité (22) selon l'une quelconque des revendications précédentes, **caractérisé en ce qu'**une trajectoire de déplacement (64) entre la lamelle d'outil (33) et la lamelle de référence (35) correspond à peu près à une trajectoire de poursuite de la barre de presse (13).

9. Dispositif de sécurité (22) selon l'une quelconque des revendications précédentes, **caractérisé en ce que** le dispositif de guidage linéaire (50) est formé de préférence par deux tiges de guidage (53) traversant le groupe de lamelles (34) dans le sens d'une longueur d'outil (31).

10. Dispositif de sécurité (22) selon l'une quelconque des revendications précédentes, **caractérisé en ce que** des forures (55), destinées à recevoir les tiges de guidage (53), sont réalisées dans la lamelle de référence (35).

11. Dispositif de sécurité (22) selon l'une quelconque des revendications précédentes, **caractérisé en ce que** des trous oblongs (56), orientés dans le sens de déplacement de la barre de presse (13) et destinés à recevoir les tiges de guidage (53), sont réalisés dans la lamelle d'outil (33).

12. Dispositif de sécurité (22) selon l'une quelconque des revendications précédentes, **caractérisé en ce que** la forure (55) dans la lamelle de référence (35) correspond à un diamètre (54) de la tige de guidage (53).

13. Dispositif de sécurité (22) selon l'une quelconque des revendications précédentes, **caractérisé en ce qu'**une largeur du trou oblong (56) correspond au diamètre (54) de la tige de guidage (53).

14. Dispositif de sécurité (22) selon l'une quelconque des revendications précédentes, **caractérisé en ce qu'**une longueur (58) du trou oblong (56) correspond à peu près à la trajectoire de déplacement (64) dans le sens de déplacement de la barre de presse (13) entre la lamelle de référence (35) et la lamelle d'outil (33).

15. Dispositif de sécurité (22) selon l'une quelconque des revendications précédentes, **caractérisé en ce que** les évidements (60), formant le canal de guidage de faisceau (65) dans la lamelle de référence (35) et la lamelle d'outil (33), sont formés par des creux en forme de rainures, ménagés dans les surfaces latérales (59) des saillies de serrage (44).

16. Dispositif de sécurité (22) selon l'une quelconque des revendications précédentes, **caractérisé en ce qu'**une distance (62) entre l'évidement (60) dans la lamelle de référence (35) et une surface d'appui (46) d'un épaulement d'outil (47) est inférieure, selon la valeur de la trajectoire de déplacement (64), à une distance (63) entre l'évidement (60) et la surface d'appui (46) dans la lamelle d'outil (33).

17. Dispositif de sécurité (22) selon l'une quelconque des revendications précédentes, **caractérisé en ce que** les évidements (60) sont formés par des trous débouchants dans les saillies de serrage (44).

18. Dispositif de sécurité (22) selon l'une quelconque des revendications précédentes, **caractérisé en ce qu'**une hauteur des évidements (60) ou des trous débouchants est égale ou inférieure à la trajectoire de déplacement (64).

19. Dispositif de sécurité (22) selon l'une quelconque des revendications précédentes, **caractérisé en ce que**, de part et d'autre du groupe de lamelles (34) ou dans les zones d'extrémité (24, 26) de la barre de presse (13) sont disposés respectivement deux émetteurs de faisceau laser (25) et deux récepteurs de faisceau laser (27), alignés en regard de ces derniers, et le groupe de lamelles (34) comporte deux canaux de guidage de faisceau (65) indépendants l'un de l'autre et formés par les évidements (60).

20. Dispositif de sécurité (22) selon l'une quelconque des revendications précédentes, **caractérisé en ce que** les évidements (60) sont réalisés respectivement sur des faces latérales (59) opposées dans les saillies de serrage (44) de la lamelle de référence (35) et de la lamelle d'outil (33).

21. Dispositif de sécurité (22) selon l'une quelconque des revendications précédentes, **caractérisé en ce que** les lamelles d'outil (33) sont formées par des lamelles à clairevoie.

22. Dispositif de sécurité (22) selon l'une quelconque des revendications précédentes, **caractérisé en ce que** des éléments d'écran pour le faisceau laser sont montés dans la rainure de réception (15) entre l'émetteur de faisceau laser (25) et le groupe de lamelles (34) et/ou le groupe de lamelles (34) et le récepteur de faisceau laser (27).
